# EUROPEAN PATENT APPLICATION

(11) **EP 2 336 027 A1**
(43) Date of publication of application: **22.06.2011**
(21) Application number: 09382287.2
(22) Date of filing: 18.12.2009
(51) Int. Cl.: B64D 39/00

(54) **Method and system for enhanced vision in aerial refuelling operations**

(71) Applicant: EADS Construcciones Aeronauticas, S.A., 28022 Madrid (ES)
(72) Inventor: Adarve Lozano, Alberto, 28906, Getafe, Madrid (ES)
(74) Representative: Elzaburu Marquez, Alberto

(57) **Abstract**

The invention relates to a system for providing enhanced vision of the refuelling scenario in aerial refuelling operations between a tanker aircraft (10) having refuelling means and a receiver aircraft, the system comprising: vision means (1) located in the tanker aircraft (10) that comprise at least two cameras (4) which are spatially separated a distance (90) from each other, directed to the observation of the refuelling area (92) where connection between the tanker aircraft (10) and the receiver aircraft occurs, this refuelling area (92) being located at a distance (91) from the cited cameras (4), and monitoring means (30) that are able to receive and display the images coming from the vision means (1), providing the air-refuelling operator with different images, these images representing different perspectives of the refuelling area (92) observed by said vision means (1), the distance (90) being calculated as a function of the distance (91) and the component (d) of the size of the refuelling area (92) in the direction of observation (93), in order to provide the air-refuelling operator with the optimum depth perception, of the refuelling area (92) at the receiver aircraft, such that the connections between the tanker aircraft (10) and the receiver aircraft are precise and accurate. The invention also relates to a method for providing enhanced vision of the refuelling scenario in aerial refuelling operations between a tanker aircraft (10) and a receiver aircraft, and to an aircraft comprising a system as it has been described.

## Description

### FIELD OF THE INVENTION

The invention relates to a system for providing enhanced vision of the refuelling scenario in aerial refuelling operations between a tanker and a receiver aircraft. The invention also relates to a method for operating such a system.

### BACKGROUND

For in-flight refuelling operations, one usual method is based on the use of a boom device for interconnecting a tanker aircraft with a receiver aircraft or receptor in flight, which is basically a telescopic or extensible tube attached to the underside of the tanker aircraft by means of an articulation element, that provides fuel passage from the tanker aircraft to the receiver aircraft. At the tanker aircraft, the operator controls visually all steps and procedures for a safe refuelling operation. From the tanker, the operator controls the boom movements and therefore manipulates the boom until it makes a physical connection with the receptacle of the approaching receptor aircraft. Once the refuelling operation is finished in a certain session, the boom is hoisted up to its secured position in the tanker aircraft.

Another usual method for in-flight refuelling operations is called probe and drogue. As the name implies, this refuelling method employs a flexible hose that trails from the tanker aircraft. The drogue is a fitting resembling a windsock or shuttlecock, attached at its narrow end with a valve to the flexible hose. The drogue stabilizes the hose in flight and provides a funnel to aid insertion of the receiver aircraft probe into the hose. The hose connects to a drum unit and, when not in use, the hose/drogue is reeled completely into the cited drum unit in the tanker aircraft. The receiver has a probe, which is a rigid arm placed on the aircraft's nose or fuselage. This probe is often retracted when not in use, particularly on high speed aircraft. At the end of the probe is a valve that is closed until it mates with the drogue, after which it opens and allows fuel to pass from tanker to receiver. A so-called "broken probe" (actually a broken fuel valve, as described above) may happen if poor flying technique is used by the receiver pilot, or in turbulence.

The operations described above are very sensitive and must be effected in a very precise and accurate way because of security reasons. In early aerial refuelling systems, the manipulation of the boom into the receiver aircraft was done with the naked eye. However, in later systems, the boomer was able to view the boom and the receiver aircraft by means of cameras positioned rearwards in the tanker aircraft. These systems had the disadvantage of not being very accurate, because the boomer had to work with adverse viewing conditions hampering the aerial refuelling operations. Document EP 1480164 discloses a system and a method for providing digitally enhanced images of aerial refuelling operations increasing the acuity of the viewing system by means of the transformation of the digital images obtained, so that the resulting images are enhanced. This system is not able to provide a permanent overview of the overall scenario of boom refuelling, so that, when a problem arises, the situational information of said problem is not immediately recognised. Moreover, this system does not give a proper and accurate view of the refuelling operation scene, to help the boomer having less operational risks. Document US 2003/0209633 discloses a system and a method for determining varying distances between a boom nozzle and a receiving aircraft refuelling receptacle, during refuelling operations. The system and method of this document use passive visual images taken from at least one camera in order to determine the length and angle of the extended boom. The system also comprises a computer that continuously uses the camera images, analysing them in order to continuously calculate the distance between the boom nozzle and the receiving aircraft refuelling receptacle. However, the system described in US 2003/0209633 does not provide an overview of the refuelling scenario, but only indications as to length and angle of the boom nozzle relative to the refuelling receptacle in the receiving aircraft. Moreover, the system and method described in this document work in such a manner that the computer compares the receiving aircraft image to the wire-model images, so that a receiving aircraft type having a known refuelling receptacle position is then selected. Thus, the problem with such a system is that, in case of an operational risk taking place, the response to such a risk is highly delayed.

Document US 4,298,176 discloses an enhanced three-dimensional viewing system for the refuelling operation between a tanker aircraft and a receiver aircraft. In this system, the depth perception of the boomer is improved, providing said boomer with the azimuth, elevation and extension data of the boom with respect to the receiver aircraft. However, the system described in US 4,298,176 does not provide the operator at the tanker aircraft with an optimum depth perception of the refuelling area, so that connections between the tanker aircraft and the receiver aircraft are not accurate and precise. Moreover, the depth perception given to the operator is not at all similar to the perspectives that the human eyes would naturally provide him in normal direct vision. Moreover, the system described in US 4,298,176 does not provide an overview of the refuelling scenario, but only indications as to the length and angle of the boom nozzle relative to the refuelling receptacle in the receiving aircraft. Neither makes the information provided by this system being a permanent overview, which directly affects the quality and acuity of the system.

Document US 5,530,650 discloses an enhanced visual guidance system to facilitate the mating of a refuelling boom on a tanker aircraft with a boom receptacle on a receiving aircraft to enable in-flight refuelling of the receiving aircraft. The system provides, on the one hand, enhanced image visual cues to facilitate the guidance of the boom in the previously-mentioned refuelling operation and, on the other hand, a real time depiction of the desired structures and aircraft. This system is able to perform such operations by means of a locating means, a display terminal and a data processor. This system is not, however, able to provide a quick response in case of operational risk taking place.

It should be therefore desirable, in aerial refuelling operations, to provide the boomer at the tanker aircraft with the enhanced vision of the area of observation for refuelling, and in particular with optimum stereoscopic vision of such area. Many stereoscopic or 3D vision systems comprise cameras that are separated between them a distance similar to the distance between the human eyes, which, for the majority of adults, is in the range of 50-75 mm. However, such separation of the cameras provides:
- a depth perception which is adequate for the perception of the separation between the viewer and the objects observed, when these objects are located in areas at distances of a few metres from the viewer;
- eyestrain and distortion of objects observed by the viewer, when these objects are located in areas at distances of a few centimetres from the viewer; and
- poor or negligible perception of the separation between objects observed, when these objects are located in areas at distances from the viewer of more than a few metres, particularly when the separation between the viewer and the objects observed is in the direction of observation.

The perception of the components, in the direction of observation, of the separation between an object and a viewer, is of particular relevance in the operation of the connection of the boom nozzle at the tanker aircraft and the receptacle at the receiver aircraft, because it is crucial to provide the operators of the refuelling means, i.e., the boom operators or boomers, with an adequate perception of the separation between the connecting devices of both aircraft, so that they can approach each other to perform a safe connection avoiding the risk of unwanted collisions.

It is therefore an object of the invention to provide a system with these functionalities, solving the previously-mentioned drawbacks.

### SUMMARY OF THE INVENTION

Therefore, the invention relates to a system for providing enhanced vision of the refuelling scenario in aerial refuelling operations between a tanker and a receiver aircraft. An air-refuelling operator is located in the tanker aircraft, this operator following the refuelling operation by means of monitoring means.

The system of the invention comprises:
- vision means located in the tanker aircraft that comprise at least two cameras which are spatially separated a first distance from each other, and which are directed to the observation of the refuelling area where connection between the tanker and receiver aircraft occurs, this refuelling area being located at a second distance from the cited cameras; and
- monitoring means that are able to receive and display the images coming from the vision means, providing the air-refuelling operator with different images, these images representing different perspectives of the refuelling area observed by said vision means.

In the system of the invention, the first distance (separation between the cameras) is calculated as a function of the second distance (separation between the cameras and the refuelling area) and the component of the size of the refuelling area in the direction of observation, in order to provide the air-refuelling operator with the optimum depth perception of the refuelling area at the receiver aircraft, such that the connections between the tanker aircraft and the receiver aircraft are precise and accurate.

The vision means also comprise at least two panoramic cameras that provide the air-refuelling operator at the tanker aircraft with panoramic images showing overview of the surroundings of the tanker aircraft for situational awareness.

The system of the invention also comprises the following elements:
- inspecting means located in the tanker aircraft, that capture images around the tanker aircraft for a close examination view of the receiver aircraft and the refuelling area, the inspecting means being configured so as to provide backup images to the cameras of the vision means, the backup images providing more detailed information of the tanker and the receiver aircraft;
- management means that receive images from the vision means and the inspecting means, distributing said images to the monitoring means, where they are displayed, the management means also providing a central interface with the rest of the system;
- recording means that store images taken from the vision means and inspecting means, the recording means also recording audio signals and graphic overlays separately.

The invention also relates to a method for providing enhanced vision of the refuelling scenario in aerial refuelling operations between a tanker aircraft having refuelling means and a receiver aircraft, the tanker aircraft comprising vision means with at least two cameras, which are directed to the observation of the refuelling area where connection between the tanker and the receiver aircraft occurs, this method comprising the steps of:
a) determining the average distance between the cameras and the refuelling area, in the direction of observation;
b) determining the average size of the refuelling area of interest for the operation, in the direction of observation, or maximum distance between objects within the refuelling area, in the direction of observation, and
c) calculating the separation between the cameras as a function of the distance determined in step a) and the size or distance determined in step b), in order to provide the air-refuelling operator with the optimum depth perception of the refuelling area at the receiver aircraft, such that the connections between the tanker aircraft and the receiver aircraft are precise and accurate.

The main characteristics of the functionality of the system of the invention are the following:
- the system provides remote vision of the refuelling scenario to the aircraft monitoring station, where the air-refuelling operator is located, at the tanker aircraft;
- the system provides the aircraft monitoring station with a panoramic permanent overview of the surroundings of the tanker aircraft for situational awareness;
- the system provides also the aircraft monitoring station with a stereo monitoring of the refuelling scenario in order to provide a detailed vision of said scenario;
- the system also allows a close examination of refuelling details, such as information overlays on the refuelling images and video recording.

The features, objects and advantages of the invention will become apparent by reading this description in conjunction with the accompanying drawings.

### BRIEF DESCRIPTION OF DRAWINGS

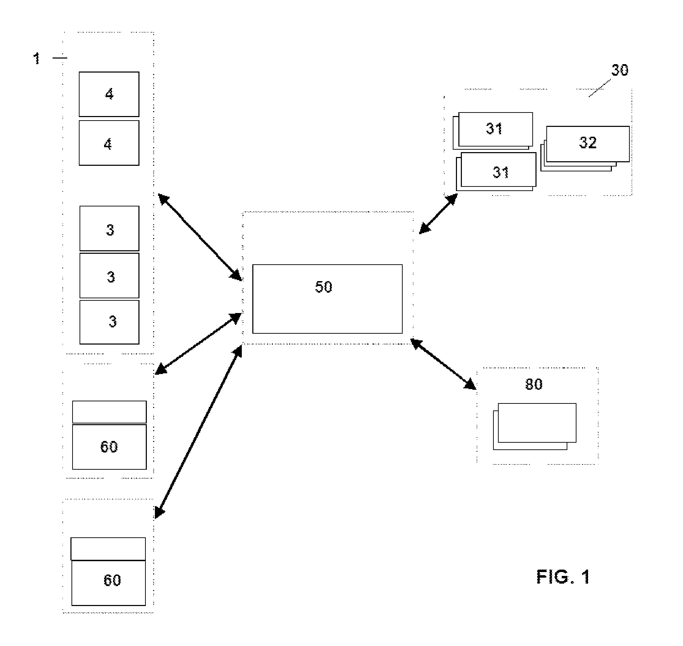

Figure 1 shows a general view of the main components of the system for providing enhanced vision in refuelling operations according to the invention.
Figures 2a and 2b show the field of view of the cameras at the vision means of the system of the invention.
Figures 3a and 3b show the field of view of the inspecting means of the system of the invention.

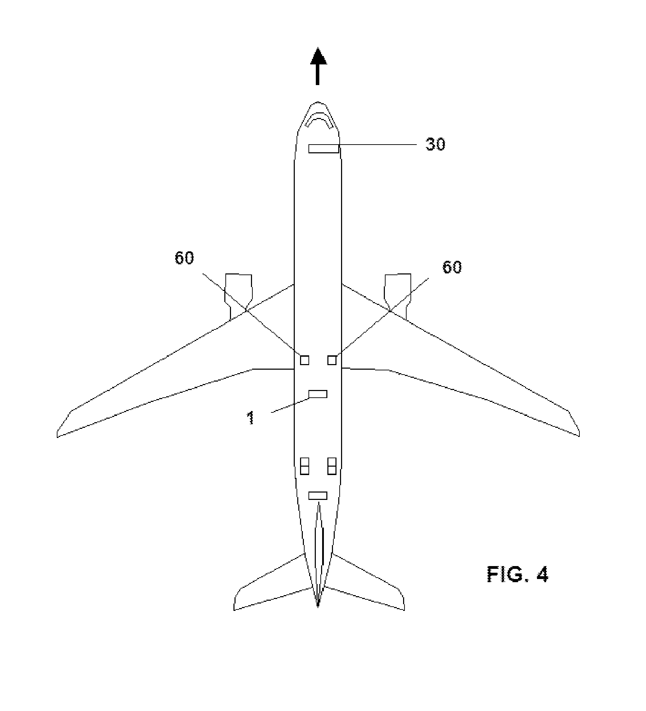

Figure 4 shows the arrangement of the elements of the system of the invention in a tanker aircraft.
Figure 5 shows the arrangement of the cameras at the vision means of the system of the invention.

### DETAILED DESCRIPTION OF PREFERRED EMBODIMENTS

The system of the present invention comprises, as it has been described in the Summary previously, vision means 1, located in the tanker aircraft 10, preferably in the lower part of the fuselage of said tanker aircraft 10, that provide both images for stereo monitoring of the refuelling scenario and panoramic images with a permanent overview of the surroundings of the tanker aircraft 10 for situational awareness. The vision means 1 comprises at least two panoramic cameras 3 and at least two cameras 4.

To create depth perception and 3D vision or 3D effect, a traditional method is based on providing two different images to the viewer, representing two different perspectives of the same object.

To achieve this, usually two cameras are placed directed for observation of a point or area, called centre of convergence, the cameras being spatially separated a distance from each other. Each of the images is seen by one eye of the viewer or operator, i.e. the image form the left camera is seen by the left eye and the image from the right camera is seen by the right eye, by means of different methods, such as: use of linearly polarized glasses and combining images from two monitors polarized in different directions; side by side viewing using head-mounted displays or other traditional methods; methods alternating left and right images with a time frequency (wiggle stereoscopy); displays with filter arrays or with two or more layers; use of prismatic and self masking crossview glasses; and others. The discrepancy of the images of the objects taken from the cameras located at different positions gives the viewer, the air-refuelling operator in this particular case, information of the position of such objects. The higher is the distance between the cameras, the bigger are the differences between both images, allowing the human brain to better discriminate the distances at which objects are placed. But also, the bigger are the differences between both images, the more difficult and uncomfortable is for the brain to integrate both signals in one 3D image and obtain this depth information. There is an optimal distance for locating the cameras which depends on many factors such as how far away is the convergence point, and the viewer capacity to integrate the images, as double image usually appears from a certain level of discrepancy of the images.

If the two different images are only slightly different from each other (due for example to a low separation between the cameras, or because there is too much distance of the convergence point), the resolution of the vision system (due to resolution of any part of the chain such as the camera, the displays or the human eyes) may not be enough to provide proper depth and/or 3D information to the viewer.

Furthermore, if the two different images provided to the viewer are much too different one from another, eyestrain, double image and/or distortion will occur.

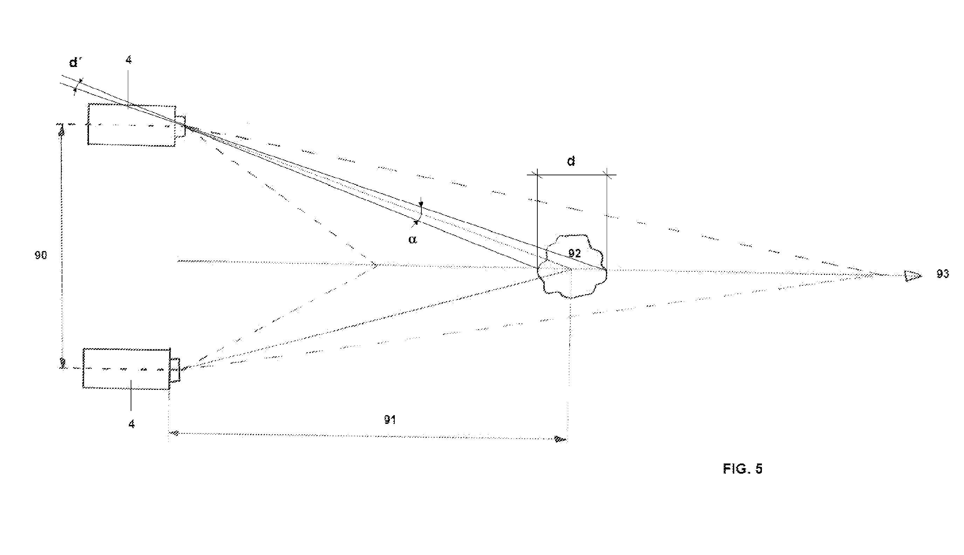

As it can be seen in Figure 5, where the following distances are defined:
90: separation of the cameras 4 at the vision means 1 of the system;
91: average distance between the cameras 4 and the refuelling area 92, in the direction of observation 93;
d: average size of the refuelling area 92 of interest for the operation, in the direction of observation 93, or maximum distance between objects within the refuelling area 92, in the direction of observation 93;
the cameras 4 provide the viewer (i.e., the boomer) with two different perspectives of objects in the refuelling area 92, these perspectives creating depth perception and 3D vision of such objects.

For given values of 90 and d, the higher the distance 91 is, the lower the angle α between the lines of view of the objects in the refuelling area 92 from the cameras 4 is, and the lower the magnitude d' at the image plane perceived by the sensing devices of the cameras 4 is. This situation results in a poor perception of the distance d of the refuelling area 92, as there exists a very low disparity between the two different perspectives obtained from the cameras 4.

However, the lower the distance 91 is, the higher the mentioned angle α is, and the higher the magnitude d' at the image plane perceived by the sensing devices of the cameras 4 is. However, if the distance 91 is too low, this situation results in the appearance of eyestrain, double image and/or distortion for the operator or boomer, as the two perspectives obtained from the cameras 4 are very different from each other.

The solution described by the system of the invention is to adapt the separation 90 of the cameras 4 taking into account the distance 91 of said cameras 4 to the refuelling area 92, and also the average distance d in the direction of view 93 at the refuelling area 92 for observation. In this way, optimum depth perception of this particular area of interest would be achieved, however assuming that eyestrain, double image and/or distortion will occur when observation is made of objects in areas 92 at lower distances than 91 from the cameras.

For the diverse type of refuelling means presently used, the resulting separation 90 between the cameras 4 at the vision means 1 are in the range of 300 to 1200 mm, considerably different and away from the range of the human inter-pupils distance of 50-75 mm. More in particular, a range of 500 to 700 mm is useful for particular types of in-flight refuelling operations.

The vision means 1 also comprise a laser pointer (not shown) for effecting the alignment of said cameras 3, 4.

The vision means 1 comprises at least two cameras 4, one left and one right. The left and right references are taken with respect to the left and right wings, respectively, as to the forward flight direction of the tanker aircraft 10. The main function of the cameras 4 is to provide video signal to the monitoring means 30 to generate a three-dimensional image of the refuelling scenario. The cameras 4 are able to correctly operate in low light conditions and under infrared illumination. Each of the cameras 4 incorporates two CCD/CMOS progressive scanning sensors (black and white and colour) with appropriate lenses to ensure day (with colour images) and night (sensitive to infrared illumination) operation. The selection of one of these two imaging systems is done by command.

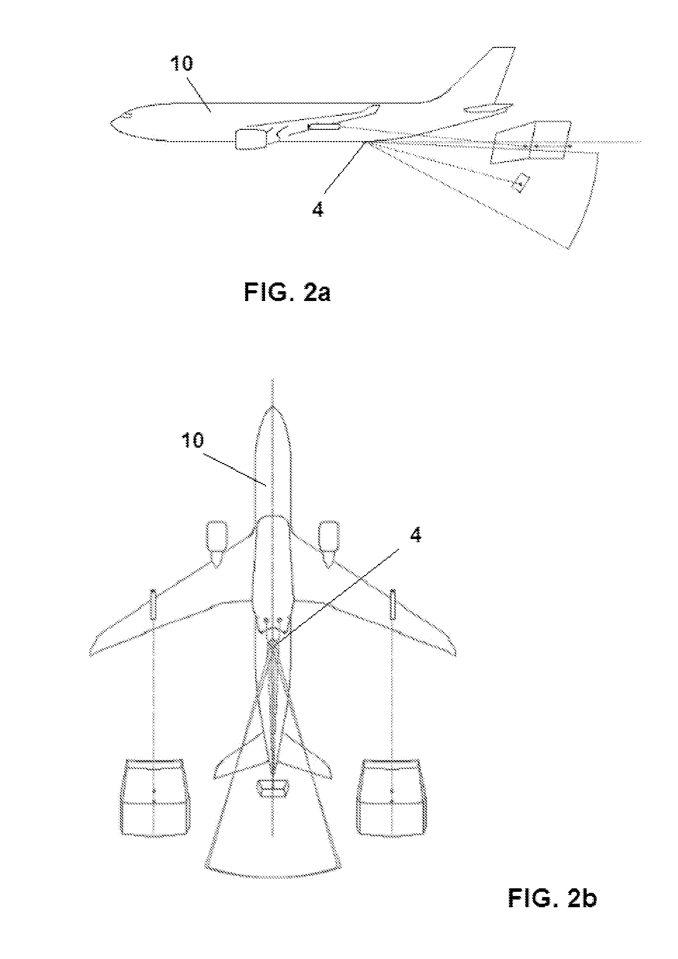

The field of view of the cameras 4 is 32° in the horizontal field and 18° in the vertical field, as it is shown In Figures 2a and 2b, respectively. Each camera 4 comprises a heating element (not shown) to start heating the cameras 4 at temperatures lower than 10°C, and to stop the heating at temperatures higher than 20°C.

The vision means 1 of the system also comprise at least two panoramic cameras 3, though they preferably comprise three panoramic cameras 3, one center, one right and one left, with respect to the left and right wings, respectively, as to the forward flight direction of the tanker aircraft 10. The aim of the panoramic cameras 3 is to provide a panoramic view of the refuelling scene. The panoramic cameras 3 are positioned in such a way that the area of interest in the aft sector between the wing tips in the tanker aircraft is covered. The images of these cameras are displayed in the monitoring means 30.

The vision means 1, in particular the panoramic cameras 3 and the cameras 4, are of a high resolution type. Typically, these cameras 3 and 4 will have a resolution of 1920x1080 pixels. However, this resolution may be higher if required. The cameras 3 and 4 operate in colour for day operation, operating in black and white for night or dusk operations. In the cases of operations at night or at dusk, the cameras 3 and 4 are used with the aid of NIR (Near Infrared) illuminators.

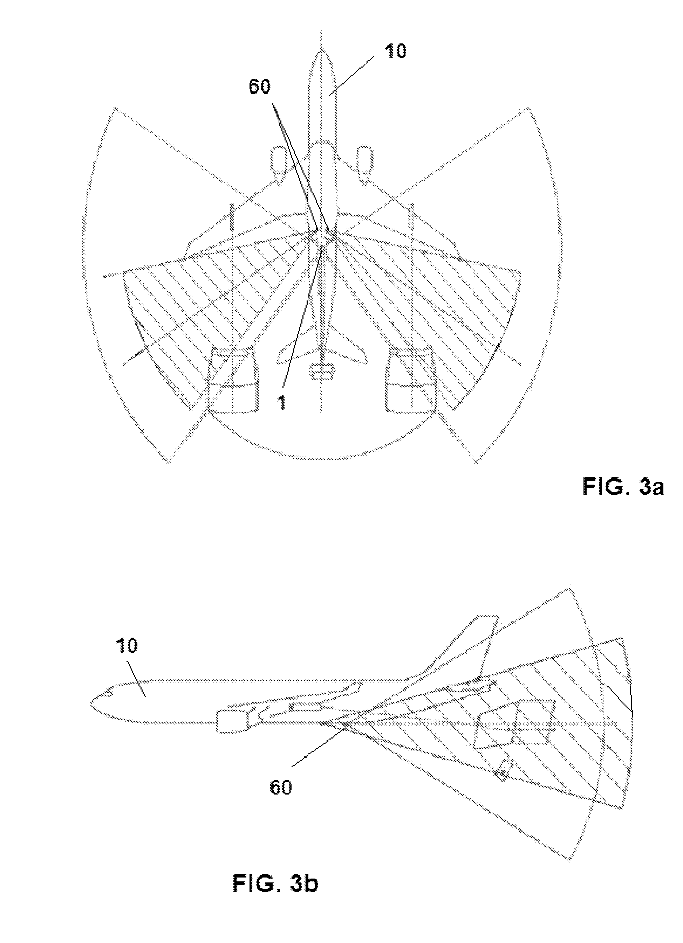

The panoramic cameras 3 operate correctly in low light conditions and under infrared illumination. The panoramic cameras 3 ensure operational conditions of the assembly of the receiver aircraft and the tanker aircraft 10, the synchronization of the image acquisition from the panoramic cameras 3 using horizontal vertical synchronization from the management means 50. The panoramic cameras 3 comprise a colour imaging system for daylight operation and a black and white imaging system for low light/infrared operation. The selection of one of these two imaging systems is done by command. Each panoramic camera 3 comprises two CCD/CMOS sensors (black and white and colour) with appropriate lenses to ensure day and night operation. The field of view of the panoramic cameras 3 is 80° in the horizontal field and 60° in the vertical field (Figures 3a and 3b). Each panoramic camera 3 comprises a heating element (not shown) to start heating the cameras 3 at temperatures lower than 10°C, and to stop the heating at temperatures higher than 20°C.

The vision means 1 also comprises processing means (not shown) located inside the tanker aircraft 10 that capture the images taken from the panoramic cameras 3 and select the desired image which is to be displayed with additional information in a graphic way, superimposed onto the original image from the cameras 4. The processing means are able to process images of high resolution type, typically of 1920x1080 pixels, being this resolution higher if required.

Two inspecting means 60 are fitted on the tanker aircraft 10, preferably under the belly fairing of the fuselage. The inspecting means 60 capture images around the tanker aircraft 10 for close examination view of the receiver aircraft and the refuelling area 92, the inspecting means 60 being configured so as to provide backup images to the cameras 4, separated a distance such that the backup images provide more detailed information on objects. The inspecting means 60 are able to capture images of the refuelling operation, these images being processed and displayed as backup images. Each one of the inspecting means 60 comprises a plan and tilt platform, an inspection camera, a transparent dome and heating means.

The pan and tilt platform is mounted in a structural cylindrical body that provides the mechanical interface of the inspecting means 60 to the tanker aircraft 10. The inspecting means 60 also comprise an inspection camera, being both the pan and tilt platform and the inspection camera protected from the environment by means of an acrylic dome. The acrylic dome is treated with an anti-fog coating on the inside and an anti-scratching coating on the outside .

The pan and tilt platform is driven by means of the inspection camera installed on it, which receives the serial commands from the management means 50 and transforms them into the adequate analogical signals to the corresponding motors. The range of movements of each pan and tilt platform is of about 70° in elevation and 200° in azimuth.

The inspection camera is installed in the dome over the pan and tilt platform, being protected by the mentioned acrylic dome from impacts and aerodynamic forces. The inspection camera is also equipped with zoom lenses.

Each inspection camera operates correctly in low light conditions and under IR illumination. To cope with low lighting conditions, the system provides proper scene illumination.

Each inspection camera incorporates two CCD/CMOS sensors (black and white and colour) with appropriate lenses to ensure day and night operation. The cameras are equipped with an optical zoom. The field of view of the camera is 30° in the horizontal field and 22,5° in the vertical field, shown in Figures 3a and 3b, respectively.

A heating means is placed inside the inspection camera. The heating starts at temperatures lower than 10°C and stops at temperatures higher than 20°C.

The management means 50 is preferably installed in a rack besides the monitoring means 30, comprising internal cooling and redundant power supply for safety reasons. The management means 50 receives the video signals from the cameras 4 and the panoramic cameras 3 and distribute them to the monitoring means 30, where they are displayed. The management means 50 also generates the overlays to be superimposed over the video streams and interfaces with the rest of the equipment of the system.

The management means 50 comprises a set of boards that are connected via a back plane, these boards being: two receiver boards (one for each group of cameras, 3 and 4), one output board for the displays from the cameras 4, one output board for the panoramic displays from the panoramic cameras 3, one system board and one interface board.

The management means 50 is based on a modularity concept and uses a module for every camera 3 or 4 and every main function. The fact that a board holds some modules for a group of cameras, in order to reduce the number of boards, does not cancel its modular basis. The system can operate if any module or even any group of cameras fails. Power supply is provided to the management means 50 through two boards in parallel. If any of these boards fails, an error is issued and the other board will still supply the system power requirements.

The management means 50 is able to manage images of high resolution type, typically of 1920x1080 pixels. This resolution can be higher, if needed.

The recording means 80 is preferably installed in the cockpit area in a rack besides the monitoring means 30 in the tanker aircraft 10. The system comprises two recording means 80 (each one with four channels), each of them being capable of recording up to four channels. The recording means 80 comprise internal cooling.

The recording means 80 stores all image data from the cameras 4, panoramic cameras 3 and inspection means 60 of the system, also recording interphone audio graphic overlays, separately but synchronized with the images. The means 80 can perform a playback of these data to visualize the recorded sequences including the audio and the overlays. All stored data will be encrypted to prevent them from unauthorized reading.

The following controls are implemented for each recording means: record, play, rewind, forward, pause, stop, introduction of "event" marks, event searching, next event, last event, etc standard recording machined functions. It is possible to playback on board the information recorded in the videos for further analysis. It is also possible to download files into a laptop, using a connector panel interface in the monitoring means 30 for this purpose. In addition, the hard disks are removable and can be used in an external ground station unit, comprising a standard computer plus an additional hardware and special software that provides the capability to replay (visualize) and delete recorded images from recording means 80. The external ground station unit comprises additional features like decryption, authentication, decoding and synchronizing data from images, sound and overlays.

Each of the recording means 80 comprises two solid-state hard disks inside for storing the information recorded. Only one of them is recording while operation of the recording means 80, the other one being used for replacing the first one once this is full. These hard disks are removable and can be interchangeable in flight. The information to be recorded is compressed by compressor cards.

The recording means 80 also comprises a hard disk and an authentication key. The hard disk provides the recording means 80 with the capacity for storing data and information, whereas the authentication key is used to access to the recording means 80 information by logging in as an authorized user, logging out when finishing operation with recording means 80, or delete users if necessary.

The recording means 80 are able to record images of high resolution type, typically of 1920x1080 pixels, this resolution being higher if needed.

The system also comprises monitoring means 30, comprising stereo monitoring means 31 for displaying images taken from the cameras 4 and panoramic monitoring means 32 for displaying images taken from the panoramic cameras 3.

The stereo monitoring means 31 are installed in consoles of the monitoring means, one for the Air Refuelling Operator (ARO) and the other one for the Mission Coordinator (MC). These two crewmembers are provided with images of the refuelling operations. The images coming form the two cameras 4 are sent to four TFT monitors, two for the ARO and two for the MC, generating a three-dimensional effect.

The main use of the stereo monitoring means 31 is to display the images of the cameras 4 and present them to the operator getting a three-dimensional composition. Additionally, in this stereo monitoring means 31 the following cameras/video images could be displayed (in two dimensions): central panoramic, right inspection, left inspection and mission system video input.

The panoramic monitoring means 32 are installed in the ARO console and are used to display the images of the panoramic cameras 3 creating a panoramic view of the refuelling scenario from one wing tip to the other of the tanker aircraft 10. Thus, the Air Refuelling Operator (ARO) is provided with a panoramic vision of the refuelling operation. The images coming from the panoramic cameras 3 are sent to the panoramic monitoring means 32 to be displayed.

These monitoring means 30 are of a high resolution type, as the vision means 1. Therefore, the images taken from the vision means 1, of a high resolution, are displayed at monitoring means 30, preferably TFT/LED, of the same resolution, obtaining high quality results.

The invention also relates to a method for providing enhanced vision of the refuelling scenario in aerial refuelling operations between a tanker aircraft 10 having refuelling means and a receiver aircraft, the tanker aircraft 10 comprising vision means 1 with at least two cameras (4), which are directed to the observation of the refuelling area 92 where connection between the tanker aircraft 10 and the receiver aircraft occurs. This method comprises the following steps:
a) determining the average distance 91 between the cameras 4 and the refuelling area 92, in the direction of observation 93;
b) determining the average size d of the refuelling area 92 of interest for the operation, in the direction of observation 93, or maximum distance d between objects within the refuelling area 92, in the direction of observation 93;
c) calculating the separation 90 between the cameras 4 as a function of the distance 91 determined in step a) and the size or distance d determined in step b), in order to provide the air-refuelling operator with the optimum depth perception of the refuelling area 92 at the receiver aircraft, such that the connections between the tanker aircraft 10 and the receiver aircraft are precise and accurate.

For determining the distances and size of steps a) and b), different degrees of information regarding the systems and devices involved in the operation may be needed, as well as information regarding the conditions and parameters of the operation, such as:
- the characteristics and/or type of the tanker aircraft 10;
- the characteristics and/or type of the receiver aircraft;
- the characteristics and/or type of the refuelling means used;
- conditions of the in-air refuelling operation such as velocity, altitude, visibility, meteorology, etc., or any other that could be relevant for appropriate distances or size, 91 or d.

Although the present invention has been fully described in connection with preferred embodiments, it is evident that modifications may be introduced within the scope thereof, not considering this as limited by these embodiments, but by the contents of the following claims.

## Claims

1. System for providing enhanced vision of the refuelling scenario in aerial refuelling operations between a tanker aircraft (10) having refuelling means and a receiver aircraft, the system comprising:
- vision means (1) located in the tanker aircraft (10) that comprise at least two cameras (4) which are spatially separated a distance (90) from each other, and which are directed to the observation of the refuelling area (92) where connection between the tanker aircraft (10) and the receiver aircraft occurs, this refuelling area (92) being located at a distance (91) from the cited cameras (4); and
- monitoring means (30) that are able to receive and display the images coming from the vision means (1), providing the air-refuelling operator with different images, these images representing different perspectives of the refuelling area (92) observed by said vision means (1),
**characterized in that**
the distance (90) is calculated as a function of the distance (91) and the component (d) of the size of the refuelling area (92) in the direction of observation (93), in order to provide the air-refuelling operator with the optimum depth perception, of the refuelling area (92) at the receiver aircraft, such that the connections between the tanker aircraft (10) and the receiver aircraft are precise and accurate.

2. System according to claim 1 wherein the vision means (1) comprise at least two panoramic cameras (3) that provide the air-refuelling operator at the tanker aircraft (10) with panoramic images showing overview of the surroundings of the tanker aircraft (10) for situational awareness.

3. System according to any of claims 1-2 wherein the distance (90) between the cameras (4) is in the range of 300 to 1200 mm.

4. System according to any of the previous claims also comprising inspecting means (60) located in the tanker aircraft (10) that capture images around the tanker aircraft (10) for close examination view of the receiver aircraft and the refuelling area (92), the inspecting means (60) being configured so as to provide backup images to the cameras (4).

5. System according to claim 4 also comprising processing means located inside the tanker aircraft (10) that capture the images taken from the panoramic cameras (3) and select the desired image which is to be displayed with additional information in a graphic way, superimposed onto the original image from the cameras (4).

6. System according to any of the previous claims also comprising management means (50) that receive images from the vision means (1) and the inspecting means (60), distributing said images to the monitoring means (30), where they are displayed, the management means (50) also providing a central interface with the rest of the system.

7. System according to any of the previous claims also comprising recording means (80) that store all image data from vision means (1), also recording interphone audio graphic overlays, separately but synchronized with the image data.

8. Method for providing enhanced vision of the refuelling scenario in aerial refuelling operations between a tanker aircraft (10) having refuelling means and a receiver aircraft, the tanker aircraft comprising vision means (1) with at least two cameras (4), which are directed to the observation of the refuelling area (92) where connection between the tanker aircraft (10) and the receiver aircraft occurs, comprising the steps of:
a) determining the average distance (91) between the cameras (4) and the refuelling area (92), in the direction of observation (93);
b) determining the average size (d) of the refuelling area (92) of interest for the operation, in the direction of observation (93), or maximum distance (d) between objects within the refuelling area (92), in the direction of observation (93);
c) calculating the separation (90) between the cameras (4) as a function of the distance (91) determined in step a) and the size or distance (d) determined in step b), in order to provide the air-refuelling operator with the optimum depth perception of the refuelling area (92) at the receiver aircraft, such that the connections between the tanker aircraft (10) and the receiver aircraft are precise and accurate.

9. Method according to claim 8, further comprising the step of obtaining panoramic images from panoramic cameras (3) at the vision means (1) for providing an overview of the surroundings of the tanker aircraft (10) for situational awareness.

10. Method according to any of claims 8-9, further comprising the step of displaying the images obtained by the cameras (4) and the panoramic cameras (3) by way of monitoring means (30).

11. Method according to any of claims 8-10, further comprising the step of capturing images around the tanker aircraft (10) by inspecting means (60) located in the tanker aircraft (10) for close examination view of the receiver aircraft and the refuelling area (92), this inspecting means (60) being configured so as to provide backup images to the cameras (4) at the vision means (1).

12. Method according to any of claims 8-11, further comprising the step of receiving images from the vision means (1) and the inspecting means (60) by management means (50), distributing later said images to the monitoring means (30), where they are displayed, the management means (50) also providing a central interface with the rest of the system.

13. Method according to any of claims 8-12, further comprising the step of storing all image data from the vision means (1) by recording means (80), also recording interphone audio graphic overlays, separately but synchronized with the image data.

14. Aircraft comprising a system according to any of claims 1-7.
